# EUROPEAN PATENT APPLICATION

(11) **EP 2 172 673 A1**
(43) Date of publication of application: **07.04.2010**
(21) Application number: 08017340.4
(22) Date of filing: 02.10.2008
(51) Int. Cl.: F16H 57/08, F03D 11/02

(54) **A gear unit comprising one or more planetary stages**

(71) Applicant: Gamesa Innovation & Technology, S.L., 31621 Sarriguren, Pamplona (ES); Hansen Transmission International, 2650 Edegem (BE)
(72) Inventor: De Laet, Wim, 2000 Antwerpen (BE); Flamang, Peter, 2820 Bonheiden (BE); Verbiest, Rik, deceased (BE); Derkinderen, Wim, 2540 Hove (BE); Etxebarria, Javier, Baranano, 48170 Zamudio (Bizkaia) (ES); Saenz de Ugarte, Patrick, 48170 Zamudio (Bizkaia) (ES)
(74) Representative: Donné, Eddy

(57) **Abstract**

A gear unit (7) comprising one or more planetary stages (8) with at least one planetary carrier to be positioned during assembly with regard to a location part of the gear unit, characterized in that the planet carrier and the location part of the gear unit are provided respectively with a first and a second radial centering surface (20) whereby the first and second radial centering surfaces (20,21) are complementary to one another.

## Description

The present invention relates to a gear unit comprising one or more planetary stages, whereby in particular at least one planetary carrier of the gear unit has to be positioned during assembly with regard to a location part of the gear unit.

More specifically, but not exclusively, the present invention relates to a gear unit comprising one or more planetary stages for use in a nacelle of a wind turbine, especially for wind turbines wherein the gear box is integrated in the drive train.

The demand for ecological clean production of power is increasing and as a consequence also the demand for bigger wind turbines producing multiple megawatts is increasing.

Such big wind turbines have typically rotor blades with diameters of 100 meters and more.

In order to be able to cope with the big loads existing in these big structures, there is a tendency to reduce the overall weight.

A known improvement for weight is obtained through the integration of the transmission gearbox of the wind turbine in the structure of the wind turbine. Hereby, the gear box is executed as a part of the drive train.

It is very important in such gearboxes to keep all the parts centered, especially the rotating parts of the gear unit.

With growing dimensions and augmented integration of the different components, this centering becomes a more and more challenging task.

This is certainly true during the first assembly of the gear unit.

In gear units for wind turbines known according to the state of the art there are no means for facilitating the alignment and centering of the different components to one another.

Often sophisticated tools as for example laser measuring equipment, micrometer measuring gauges, etc... are indispensable in order to have at least an idea about the deviation from the ideal centring.

Hereby, in some cases the planet carriers are assembled in an assembling plant in the gear unit prior to installation on site, whereas in other cases, as with the recent most integrated types of wind turbines, the final assembly of the planet carrier in the wind turbine housing is only possible on the installation site.

Both situations have their own particular problems.

Assembling the gear unit prior to installation is for example advantageous on the one hand in that the conditions for assembling are mostly ideal, the assembling crew not being disturbed by weather conditions and having the right lifting tools and manipulation space by hand.

On the other hand, after assembling the gear unit has to be transported to the final installation site.

Such a heavy weight transport leads often to unfavourable conditions for gearbox parts sensitive for vibrations and/or friction load, which causes in some cases damage initiation as for example false brinelling.

Assembling directly on site is disadvantageous in that it is difficult to manipulate the different components in bad conditions like the weather conditions and on high altitudes on top of a wind turbine tower, which makes the centering of the gear unit components a difficult task.

Also during maintenance after the initial assembly, for example when some components of the gear unit like a planet carrier bearing, a planet wheel or a planet bearing have to be replaced, an additional aligning and centering of the different components of the gear unit is required, which is far from simple in the existing gear units.

So, an improved way of aligning during assembly and servicing of the gear unit has to be provided, which is one of the aims of the present invention.

Furthermore, it is also an aim of the invention to avoid problems of damage initiation in a pre-assembled gear unit during transport to the final site of installation.

The present invention aims at a gear unit, for example a gear unit used in a wind turbine, which does not show one or more of the above and other disadvantages.

To this aim, the invention relates to a gear unit comprising one or more planetary stages with at least one planetary carrier to be positioned during assembly with regard to a location part of the gear unit, wherein the planet carrier and the location part of the gear unit are provided respectively with a first and a second radial centering surface and whereby the first and second radial centering surfaces are complementary to one another.

An important advantage of such a gear unit according to the present invention is that due to the complementary shape of said first and of said second radial centering surfaces, the assembly of the gear unit is much easier.

Indeed, according to the invention, by pushing the planet carrier with its first radial centering surface towards the second radial centering surface on the location part of the gear unit, the planet carrier is automatically brought in the right position for assembly.

According to a preferred embodiment of a gear unit in accordance with the present invention, the first and second radial centering surfaces are conical surfaces.

Such conical radial centering surfaces have the advantage of being perfectly shaped for the purpose of automatically aligning and centering the respective parts of the gear unit.

According to another preferred embodiment of a gear unit in accordance with the present invention, the central axis of said first conical surface on the planet carrier is additionally aligned with the central axis of said planet carrier.
An advantage of such a gear unit according to this embodiment is that the conical surface on the planet carrier can be used as a reference surface for the axis of the planet carrier, whereby, during assembly, by pushing this first conical surface of the planet carrier against the second conical surface on the gear unit, which is complementary to the first, the axis of the planet carrier is automatically aligned with the axis of the second conical surface.

According to a still more preferred embodiment of a gear unit in accordance with the present invention, the central axis of said second conical surface is additionally aligned with the central axis of a ring wheel of the gear unit. An advantage of such a gear unit in accordance with this embodiment, is that the conical surface on the gear unit represents a reference surface for the axis of the ring wheel of the planetary stage, whereby, during assembly, by pushing the first conical surface of the planet carrier against the second conical surface on the gear unit, the axes of the planet carrier and the ring wheel are automatically aligned with one another and as a consequence the assembly of the gear unit is simplified considerably, which was one of the aims of the invention.

With the intention of better showing the characteristics of the invention, hereafter, as an example without any restrictive character whatsoever, some preferred forms of embodiment of a gear unit according to the present invention, with reference to the accompanying drawings, wherein:
figure 1 represents schematically a side view of a typical wind turbine wherein a gear unit in accordance with the present invention is integrated;
figure 2 represents on a bigger scale the part of the gear unit in accordance with the present invention indicated by F2 in figure 1; and,
figures 3 and 4 represent cross-sections similar to the one in figure 2 of other embodiments of a gear unit in accordance with the present invention.

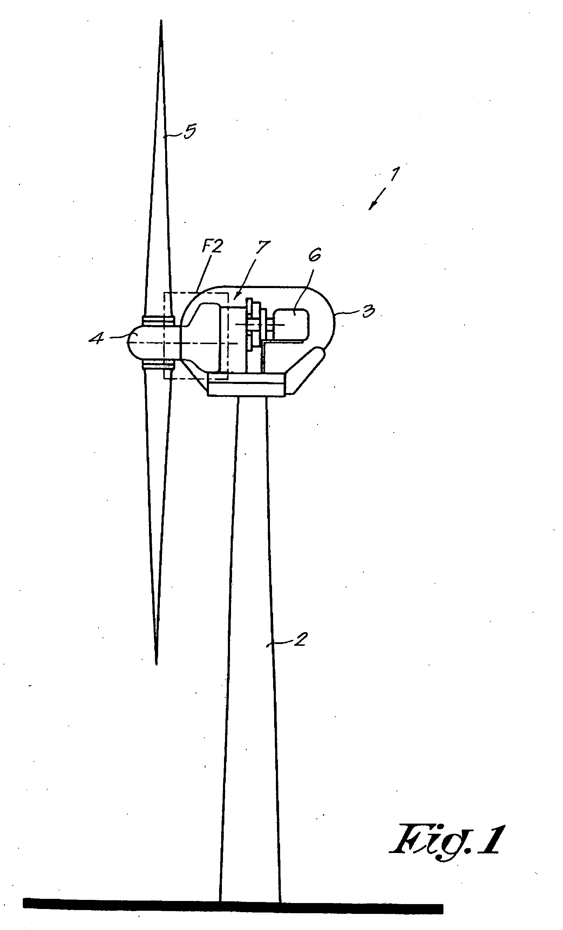

The typical wind turbine 1 represented in figure 1 consists of a static supporting structure 2 on which a nacelle 3 is mounted rotatably around a vertical axis, which allows for the adjustment of the position of the wind turbine 1 to the wind direction.

In the nacelle 3 a rotor with a rotor hub 4 and with rotor blades 5 is provided, whereby the rotor hub 4 is connected to a generator set 6 through a gear unit 7.

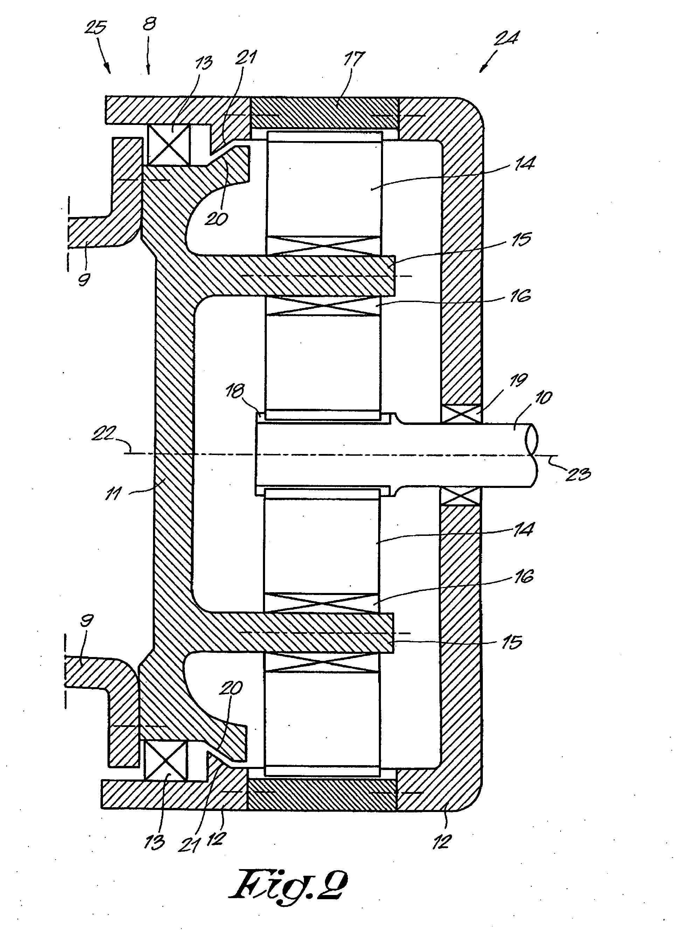

Typically such a gear unit 7 of a wind turbine 1 consists of one or more planetary gear stages 8, as shown more in detail in the example of figure 2 for a gear unit with one stage, whereby an input shaft 9 of such a planetary stage 8 is connected to the rotor hub 4 of the wind turbine 1 and an output shaft 10 is connected to the generator set 6.

In the case of figure 2 the input shaft 9 is provided on a planet carrier 11 which is rotatably mounted in a housing structure 12 of the gear unit 7 by means of a bearing 13, which in this case is an integrated main bearing, whereby the housing structure 12 is fixedly connected to the nacelle 3 (not shown in the pictures).

On the planet carrier 11 planet wheels 14 are rotatably mounted on planet shafts 15 by means of planet bearings 16.

These planet wheels 14 collaborate, on the one hand with a ring wheel 17 provided in the housing structure 12 and on the other hand with a sun gear 18 provided on the output shaft 10 and mounted rotatably in the housing structure 12 by means of bearing 19.

This allows for the transformation of a slow rotation at the rotor side 4 into a high speed rotation at the generator side 6.

In accordance with the present invention the gear unit 7 is in this case of a special shape, i.e. the gear unit 7 is provided with a first radial centering surface 20 on the planet carrier 11 and with a second radial centering surface 21 on another part of the gear unit 7, which we will call hereafter the location part of the gear unit 7 and which is in this case a part of the housing structure 12 nearby the ring wheel 17.

Additionally it has to be mentioned that the first radial centering surface 20 and the second radial centering surface 21 are according to the invention of complementary shape.

In particular, in the embodiment shown, the first and second radial centering surfaces 20 and 21 are of a conical shape.

Actually, the first conical surface 20 is complementary to the second conical surface 21, since it is provided on the outside of the planet carrier 11 whereas the second conical surface 21 is provided on the inside of the housing structure 12, whereby in particular both surfaces 20 and 21 are annular conical surfaces of the same shape with the same taper angle.

According to a preferred embodiment of the present invention the central axis 22 of the first conical surface 20 is aligned with the central axis 22 of the planet carrier 11.

Furthermore, it is preferred according to the invention that the central axis 23 of the second conical surface 21 on the location part of the housing 12 is aligned with the central axis 23 of the ring wheel 17 of the gear unit 7.

The use of a gear unit 7 according to the invention is simple and as follows.

If it is supposed that the right hand part 24 of the housing structure 12 is not yet in place (see figure 2), it is clear that the planet carrier 11 can be brought into the left hand part 25 of the housing structure 12.

So, when the planet carrier 11 is pushed far enough into the housing structure, the first conical surface 20 of the planet carrier 11 can be brought in contact with the second conical surface 21 on the gear unit 7.

In the shown embodiment, the first conical surface 20 of the planet carrier 11 enters the second conical surface 21 on the gear unit 7, during assembly.

In this manner and because the conical surfaces 20 and 21 are complementary, the planet carrier 11 will be automatically aligned with the ring wheel 17.

In this way a far more flexible manner of assembling is obtained.

For example the radial centering surfaces 20 and 21 allow for a centering of the planet carrier 11 without having the main bearing 13 to be installed, simply by pushing and keeping the rotatable planet carrier 11 against the static location part of the housing structure 12.

Then, when the main bearing 13 has to be installed in a later stadium, the planet carrier 11 is moved first a little bit away from to the location part in order to create a clearance which allows for a rotation of the planet carrier 11 with regard to the housing 12, after which the main bearing 13 can be positioned on its place in the housing 12.

After installation of the main bearing 13, the planet carrier 11 is kept centrally in the housing 12 by means of the main bearing.

Another advantage of a gear unit 7 according to the invention is that often the planet carrier 11 and the rest of the planetary stage, like the planet wheels 14 and planet bearings 15, as well as the sun wheel 18 and outgoing shaft 10, are pre-assembled in the housing 12 in an assembling plant or the like.

Hereby, in the known gear units during transport the planet wheels 14 are not kept centrally, since there are no means provided to do so, which is often a cause of damage initiation to the gear unit 7 due to overload by the weight of the planet carrier 11 on the planet bearings 15 or the gear intermeshing between the different gears, i.e. the planet gears 14 with the ring wheel 17 and the sun wheel 18.

With a gear unit 7 in accordance with the present invention, the planet carrier 11 can be kept easily centrally in the gear unit housing 12 during transport by bringing the radial centering surfaces 20 and 21 in contact with one another, so that the weight of the planet carrier 11 is transmitted through these surfaces 20 and 21 and the remaining parts of the planetary gear stage (planet wheels 14, planet bearings 15, sun wheel 18 and ring wheel 17) are not subjected to this weight of the planet carrier 11.

In that way the planet wheels and planet bearing can actually "float" in their clearance so that damage initiation during transport is avoided.

In a completely similar manner overload during transport on a pre-assembled planet carrier bearing 13 can be avoided.

It is also clear that in case the gear unit 7 has to be serviced, the dismounting and mounting of the different parts is much easier than in the known gear units.

Indeed, the first and second conical surfaces 20 and 21 can be used to keep the planet carrier 11 in its place during the servicing, so that no extra measures have to be taken for the alignment of the different shafts.

Numerous other embodiments of the invention are possible which are different from the one shown in figure 2.

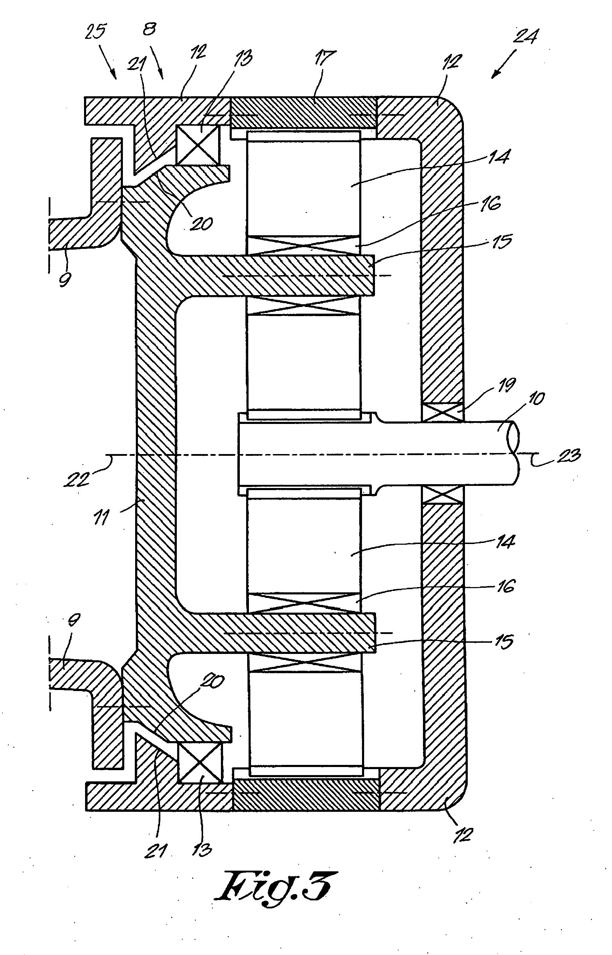

For example in figure 3 an embodiment is shown wherein the emplacement of the first and second conical surfaces 20 and 21 with regard to the bearing 13 supporting the planet carrier is somewhat different.

In particular, the location part of the gear unit 7 is in the case of figure 2 in between the main bearing 13 and the ring wheel 17, whereas in figure 3 the main bearing 13 is positioned in between the ring wheel 17 and the location part.

The embodiment of figure 3 could be advantageous if it is preferred to dismount the bearing 13 from inside the housing structure 12.

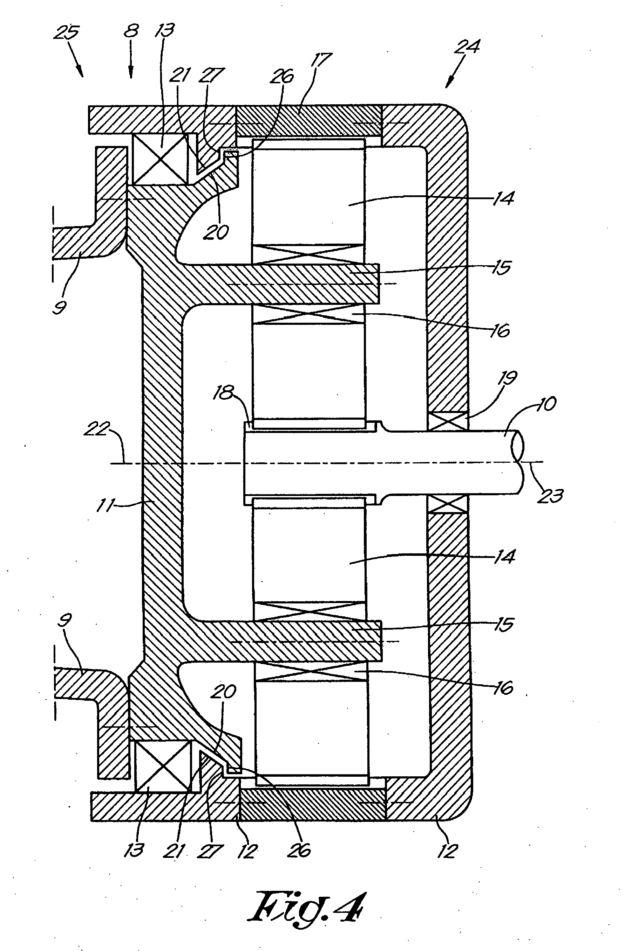

Another embodiment of a gear unit 7 in accordance with the present invention is represented in figure 4, whereby this time the planet carrier 11 is provided additionally with a first axial abutment surface 26 which is complementary to a second axial abutment surface 27 on the location part of the gear unit.

Hereby, the first and the second axial abutment surfaces 26 and 27 on the planet carrier 11 and on the location part respectively provide a limitation for relative axial movement of the planet carrier 11 towards the location part of the gear unit 7.

Furthermore, in the embodiment of figure 4, the axial first and second abutment surfaces 26 and 27 have a disc shaped form and are oriented perpendicular to the central axis of the planet carrier 11 and the location part respectively.

One of the advantages of having such axial abutment surfaces 26 and 27 is that when the planet carrier 11 is pushed in the location part in an axial direction, the movement is stopped at the moment of contact between the axial abutment surfaces 26 and 27, whereby in collaboration with the radial centering surfaces 20 and 21 a perfect alignment and centering is always automatically obtained.

Hereby, no mistakes can occur due to for example a bad angular positioning between planet carrier 11 and location part of the housing 12.

According to the invention it is also not excluded to have a situation somewhat opposite to that of figures 2 to 4, whereby a first conical surface on the planet carrier 11 is outside a second conical surface on another part of the gear unit 7, after assembly.

Although in figures 2 and 3 the planet carrier 11 with the first conical surface 20 is rotatable with regard to the part of the gear unit 7 with the second conical surface 21, which is supposed to be static in these examples, it is also possible in accordance with the present invention to have a situation whereby the planet carrier 11 is static and the ring wheel 17 is rotating.

Furthermore, it is not excluded according to the present invention to provide a first conical surface 20 on the inside of the planet carrier 11 which is of the same shape as a second conical surface 21 provided at the outside of for example the housing structure 12, in order to obtain two conical surfaces 20 and 21 which are complementary to one another in the sense of the present invention.

Although it is preferred that the conical surfaces 20 and 21 are of a continuous annular circumference, it is not excluded that the surfaces are interrupted and are not necessarily annular.

The present invention is in no way limited to the embodiments described above and represented in the drawings, but such a gear unit 7 may be realised in different shapes and dimensions, without departure from the scope of the invention.

## Claims

1. A gear unit (7) comprising one or more planetary stages (8) with at least one planetary carrier to be positioned during assembly with regard to a location part of the gear unit, **characterized in that** the planet carrier and the location part of the gear unit are provided respectively with a first and a second radial centering surface (20) whereby the first and second radial centering surfaces (20,21) are complementary to one another.

2. A gear unit (7) according to claim 1, **characterized in that** the first and second radial centering surfaces are conical surfaces.

3. A gear unit (7) according to claim 2, **characterized in that** the central axis (22) of said first conical surface (20) on the planet carrier (11) is aligned with the central axis (22) of said planet carrier (11).

4. A gear unit (7) according to claim 3, **characterized in that** the central axis (23) of said second conical surface (21) is aligned with the central axis (23) of a ring wheel (17) of the gear unit (7).

5. A gear unit (7) according to any one of the preceding claims, **characterized in that**, when the gear unit (7) is assembled, the first radial centering surface (20) of the planet carrier (11) is axially inside the second radial centering surface (21) on the gear unit (7).

6. A gear unit according to any one of the preceding claims, **characterized in that**, during assembling, the planet carrier (11) can be axially moved with its first radial centering surface (20) towards the part of the gear unit with the second radial centering surface until there is contact between the first and the second radial centering surfaces.

7. A gear unit (7) according to any one of the preceding claims, **characterized in that** the planet carrier (11) is provided with a first axial abutment surface (26) which is complementary to a second axial abutment surface (27) on the location part of the gear unit (7).

8. A gear unit (7) according to claim 7, **characterized in that** the first and the second axial abutment surfaces (26,27) on the planet carrier (11) and on the location part respectively provide a limitation for relative axial movement of the planet carrier (11) towards the location part of the gear unit (7).

9. A gear unit (7) according to claim 7 or 8,
**characterized in that** the axial first and second abutment surfaces (26,27) have a disc shaped form and are oriented perpendicular to the central axis of the planet carrier (11) and the location part respectively.

10. A gear unit (7) according to any one of the preceding claims, **characterized in that** the planet carrier (11) with the first conical surface (20) is rotatable with regard to the location part of the gear unit (7) with the second conical surface (21).

11. A gear unit (7) according to claim 10, **characterized in that** the part of the gear unit (7) with the second conical surface (21) is a static part.

12. A gear unit (7) according to any one of the preceding claims, **characterized in that** the gear unit (7) is integrated in a wind turbine (1).
